(19) Europäisches Patentamt
European Patent Office
Office européen des brevets

(11) **EP 3 656 549 B1**

(12) **FASCICULE DE BREVET EUROPEEN**

(45) Date de publication et mention
de la délivrance du brevet:
**09.08.2023 Bulletin 2023/32**

(21) Numéro de dépôt: **19212401.4**

(22) Date de dépôt: **23.11.2009**

(51) Classification Internationale des Brevets (IPC):
**B32B 5/02** *(2006.01)* **B29C 70/50** *(2006.01)*
**B29C 70/54** *(2006.01)* **B29B 15/12** *(2006.01)*
**B29C 70/08** *(2006.01)* **B29C 70/14** *(2006.01)*
**B29C 70/20** *(2006.01)* **B32B 5/12** *(2006.01)*
**B32B 5/26** *(2006.01)* **B32B 37/06** *(2006.01)*
**B32B 3/08** *(2006.01)* **B32B 5/08** *(2006.01)*
**B32B 7/04** *(2019.01)* **B29K 105/00** *(2006.01)*
**B29K 307/04** *(2006.01)* **B29K 105/08** *(2006.01)*

(52) Classification Coopérative des Brevets (CPC):
**B32B 5/26; B29B 15/12; B29C 70/086;**
**B29C 70/14; B29C 70/20; B29C 70/506;**
**B29C 70/545; B32B 5/02; B32B 5/022; B32B 5/08;**
**B32B 5/12; B32B 7/04;** B29K 2105/0854;
B29K 2105/251; B32B 2250/03; (Cont.)

(54) **MATERIAU INTERMEDIAIRE DE LARGEUR CONSTANTE POUR LA REALISATION DE PIECES COMPOSITES PAR PROCEDE DIRECT**

ZWISCHENMATERIAL VON KONSTANTER BREITE FÜR DIE HERSTELLUNG VON VERBUNDWERKSTÜCKEN ÜBER DIREKTVERFAHREN

INTERMEDIATE MATERIAL WITH CONSTANT WIDTH FOR THE PRODUCTION OF COMPOSITE PARTS BY DIRECT METHOD

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **28.11.2008 FR 0858096**

(43) Date de publication de la demande:
**27.05.2020 Bulletin 2020/22**

(62) Numéro(s) de document de la (des) demande(s) initiale(s) en application de l'article 76 CBE:
**18200531.4 / 3 446 868**
**09795500.9 / 2 358 516**

(73) Titulaire: **Hexcel Reinforcements**
**01120 Dagneux (FR)**

(72) Inventeurs:
• **BERAUD, Jean-Marc**
**38140 RIVES (FR)**
• **BRUYERE, Alain**
**38630 LES AVENIERES (FR)**
• **LAMETHE, Jean-Florent**
**31000 TOULOUSE (FR)**

• **DUCARRE, Jacques**
**38630 CORBELIN (FR)**

(74) Mandataire: **Cabinet Beau de Loménie**
**51 avenue Jean Jaurès**
**BP 7073**
**69301 Lyon Cedex 07 (FR)**

(56) Documents cités:
**EP-A1- 0 554 950 WO-A1-91/12898**
**FR-A1- 2 600 585 US-A1- 2005 048 280**

**(Cont. page suivante)**

(52) Classification Coopérative des Brevets (CPC):
(Cont.)
B32B 2250/20; B32B 2250/44; B32B 2260/023;
B32B 2260/046; B32B 2262/02; B32B 2262/023;
B32B 2262/0253; B32B 2262/0261;
B32B 2262/0269; B32B 2262/0276;
B32B 2262/0284; B32B 2262/0292; B32B 2262/10;
B32B 2262/101; B32B 2262/105; B32B 2262/106;
B32B 2262/14; B32B 2307/54; B32B 2307/732;
B32B 2603/00; B32B 2605/08; B32B 2605/12;
B32B 2605/18

**Description**

La présente invention concerne le domaine technique des matériaux de renfort, adaptés à la constitution de pièces composites. Plus précisément, l'invention concerne un nouveau matériau intermédiaire pour la réalisation de pièces composites, par injection ou infusion ultérieure de résine thermodurcissable, un procédé de fabrication de pièces composites à partir d'un empilement d'un tel matériau, ainsi que les pièces composites obtenues.

La fabrication de pièces ou d'articles composites, c'est-à-dire comprenant, d'une part, un ou plusieurs renforts ou nappes fibreuses et, d'autre part, une matrice principalement de type thermodurcissable (« résine ») et pouvant inclure des thermoplastiques, peut, par exemple, être réalisée par un procédé dit "direct" ou "LCM" (de l'anglais Liquid Composite Moulding »). Un procédé direct est défini par le fait qu'un ou plusieurs renforts fibreux sont mis en oeuvre à l'état "sec" (c'est-à-dire sans la matrice finale), la résine ou matrice, étant mise en oeuvre séparément, par exemple par injection dans le moule contenant les renforts fibreux (procédé "RTM", de l'anglais Resin Transfer Moulding), par infusion au travers de l'épaisseur des renforts fibreux (procédé "LRI", de l'anglais « Liquid Resin Infusion » ou procédé "RFI", de l'anglais « Resin Film Infusion »), ou bien encore par enduction/imprégnation manuelle au rouleau ou au pinceau, sur chacune des couches unitaires de renfort fibreux, appliquées de manière successive sur la forme.

D'autres procédés dits indirects utilisent des matériaux pré-imprégnés qui comportent déjà un taux suffisant de résine pour la constitution de la pièce composite souhaitée. De tels matériaux sont notamment décrits dans les documents US 2005/048280, WO 92/20521 et EP 0 554 950.

Pour les procédés RTM, LRI ou RFI, il faut en général tout d'abord fabriquer une préforme fibreuse de la forme de l'article fini désiré, puis imprégner cette préforme d'une résine. La résine est injectée ou infusée par différentiel de pressions, en température, puis une fois que toute la quantité de résine nécessaire est contenue dans la préforme, l'ensemble est porté à une température plus élevée pour réaliser le cycle de polymérisation/réticulation et ainsi entraîner son durcissement.

Les pièces composites utilisées dans l'industrie automobile, aéronautique ou navale, sont en particulier soumises à des exigences très strictes, notamment en termes de propriétés mécaniques. Il est donc particulièrement important de disposer de matériaux qui, d'une part présentent une grande régularité, et d'autre part offrent des facilités de manipulation et de mise en oeuvre.

Dans ces secteurs, un grand nombre de préformes sont réalisées à base de matériaux de renfort, en fibres de carbone, notamment du type unidirectionnels. Afin de répondre aux standards élevés, en termes de qualité et de productivité, exigés dans le secteur de l'aéronautique notamment, il est de plus en plus nécessaire de mettre en oeuvre des procédés d'automatisation. Aussi, il est recherché des matériaux unidirectionnels présentant une structure régulière et notamment une faible variabilité en terme de largeur, afin d'éviter le plus possible les manquements de matières (« gap » en anglais) ou chevauchements (« overlap » en anglais) entre deux renforts contigus, dans les procédés de drapage ou de dépose automatique.

Dans l'art antérieur, sont proposées des nappes unidirectionnelles de fils de renfort dans lesquelles la cohésion entre les fils est assurée par des fils de liage thermoplastiques ou verre/thermoplastiques tissés ou non qui s'étendent transversalement aux fils de renfort. De telles nappes sont, par exemple, commercialisées sous les références PW-BUD par SIGMATEX UK Limited, Runcom Cheshire WA7 1TE, United Kingdom).

Sur ces rubans, la liaison entre les fils n'est assurée que de manière ponctuelle, les fibres de renforts étant libres entre les fils de liage. Aussi, des variations de largeur importantes existent, notamment entre les fils de liage, entraînant des écarts types de largeur, qui varient notamment de 0,40 à 1,00 mm.

Par ailleurs, lorsque de telles nappes unidirectionnelles sont découpées, parallèlement à la direction des fils de renfort (classiquement appelé axe 0°) pour obtenir une largeur souhaitée, les bords découpés ne sont pas nets et présentent des effilochures correspondant à des fragments de filament. Ces fibres coupées sont en général très gênantes pour les procédés ultérieurs, par exemple par la création de bourres, d'enroulement de matière sur les rouleaux (appelées « bagues »)...

Le document WO 91/12898 décrit un procédé de préparation d'un ruban de fils ou filaments de renfort, qualifié de préimprégné, associé sur chacune de ses faces à un liant polymérique, dans lequel les fils ou filaments s'étendent selon une direction parallèle à la longueur du ruban. Un ruban obtenu par le procédé décrit, qui présente une largeur donnée, est, notamment, présenté sur la Figure 4A. Le procédé décrit dans le document WO 91/12898 comprend a) l'association du ruban sur chacune de ses faces au liant polymérique qui est une poudre de polyamide dans les exemples 1 et 2. Le Tableau II de l'exemple 2 mentionne une quantité de liant polymérique qui représente 11,9 % du volume total du ruban obtenu. Après l'étape a), en page 11 lignes 23 à 25 du document WO 91/12898, il est indiqué que « le ruban imprégné 10b passe par un dispositif de chauffage 19, contrôlé par un régulateur de température 20, puis par des guides 21 et un rouleau de pincement 22 qui contrôle la largeur du ruban pré-imprégné 10c avant d'être enroulé sur un tambour récepteur 23. »

Aussi, la présente invention a pour but de proposer un procédé permettant de réaliser des nappes unidirectionnelles, de largeur donnée, qui présente une grande régularité, adaptées à des procédés directs de réalisation de pièces composites, à partir de un ou plusieurs fils, tout en limitant les pertes de matières.

Un autre objectif de l'invention est de proposer un procédé permettant de réaliser des nappes unidirectionnelles, sans fibres coupées le long de leur direction principale.

Dans ce contexte, la présente invention a pour objet un procédé de préparation d'un ruban de fils ou filaments de renfort selon la revendication 1.

Le procédé selon l'invention, permet de fabriquer, à façon, des largeurs données de matériaux à base d'un fil de renfort unique ou de plusieurs fils de renfort s'étendant selon une direction parallèle à la longueur du matériau.

Dans le cadre de l'invention, des rubans de largeur sensiblement constante sont obtenus, c'est-à-dire que les rubans possèdent une très faible variabilité de largeur sur toute leur longueur. Par longueur, on entend au minimum une centaine de mètres. Par ruban ou bande, on entend un matériau en feuille qui présente une longueur, bien supérieure à sa largeur. En général, les rubans préparés selon le procédé de l'invention présentent une très grande longueur, pouvant notamment correspondre aux longueurs de fils disponibles dans le commerce. Grâce au procédé selon l'invention, la largeur du ruban présentera, sur toute la longueur du ruban, un écart type notamment inférieur à 0,25 mm, de préférence inférieur à 0,22 mm et préférentiellement inférieur ou égal à 0,20 mm. La largeur des rubans et l'écart type pourront être déterminés selon la méthode décrite dans les exemples pour les résultats du **TABLEAU 3.** L'écart type peut être défini comme la moyenne quadratique des écarts à la moyenne, soit:

$$\sqrt{\frac{1}{n}\sum_i (x_i - \overline{x})^2}$$

avec:

n = nombre de valeurs
$x_i$ = une valeur
$\overline{x}$ = moyenne arithmétique

Du fait de leur largeur sensiblement constante, les rubans selon l'invention présentent également une très faible variabilité en termes de masse surfacique.

Le procédé selon l'invention peut être mis en oeuvre, aussi bien pour la réalisation de rubans, chacun à partir d'un seul fil (correspondant à un ensemble de filaments) que pour la réalisation de rubans, chacun à partir de plusieurs fils.

Il est également possible de mettre en oeuvre le procédé selon l'invention de manière à réaliser plusieurs rubans simultanément.

La présente invention a également pour objet un ruban de fils ou filaments de renfort associé sur chacune de ses faces à un liant polymérique, dans lequel les fils ou filaments s'étendent selon une direction parallèle à la longueur du ruban caractérisé en ce que ledit ruban présente une largeur donnée sensiblement constante sur toute sa longueur, la largeur du ruban présentant, sur toute la longueur du ruban, un écart type notamment inférieur à 0,25 mm, de préférence inférieur à 0,22 mm et préférentiellement inférieur ou égal à 0,20 mm.

La présente invention a également pour objet les rubans susceptibles d'être obtenus selon les différentes variantes du procédé tel que défini précédemment et dans le texte qui va suivre.

Diverses autres caractéristiques ressortent de la description faite ci-dessous en référence aux dessins annexés.

Les **Figures 1** et **2** sont, respectivement, une représentation schématique, en perspective, partiellement arrachée, et en coupe, d'un ruban obtenu selon une variante hors de l'invention, dans le cas où la nappe unidirectionnelle est associée à deux non tissés.

La **Figure 3** est une vue de dessus d'un ruban obtenu selon une variante hors du cadre de l'invention, dans le cas où la nappe unidirectionnelle est associée à de la poudre sur chacune de ses faces.

La **Figure 4** est une photographie d'un ruban obtenu hors du cadre de l'invention, mettant en évidence son bord bien net.

La **Figure 5** représente de façon schématique une vue d'ensemble d'un dispositif de réalisation d'un ruban associé sur chacune de ses grandes faces à un non-tissé.

La **Figure 6** représente de façon schématique un fil ou un ensemble de fils passant dans des moyens d'étalement et de calibration.

La **Figure 7** représente l'élément D de la figure 3 qui correspond à l'élément de calibration avant association au liant polymérique, dans le cas où plusieurs rubans à base d'un fil unique sont réalisés simultanément.

La **Figure 8** représente une vue partielle du dispositif de découpe dans le cas où plusieurs rubans sont réalisés en parallèle.

Les **Figures 9A, 9B** et **10** comparent la largeur moyenne et l'écart type obtenu avec d'une part un ruban hors du cadre de l'invention associant une nappe unidirectionnelle de **193g/m²** (réalisé avec 28 fils IMA GS 12 K de 446Tex sur une largeur de 64,7mm) à deux non-tissés et un ruban réalisé avec les mêmes fils, mais sans calibrage, et les deux mêmes non-tissés.

Les **Figures 11, 12A** et **12B** comparent d'une part un ruban hors du cadre de l'invention associant une nappe unidirectionnelle de 126g/m² (réalisé avec 1 fil AS7JK 12K de 785Tex sur une largeur moyenne 6,21mm) à deux non-tissés et un ruban réalisé avec le même fil mais sans calibrage et les deux mêmes non-tissés.

La **Figure 13** montre la répartition en largeur d'un ruban conforme à l'invention associant une nappe unidirectionnelle de 304g/m² (réalisé avec 1 fil AS7JK 12K de 785Tex sur une largeur moyenne de 2,58mm) à de la poudre.

Le procédé selon l'invention permet de calibrer et maîtriser la largeur des rubans de fibres unidirectionnelles obtenus et de figer la calibration des rubans par l'association des fibres de renfort unidirectionnelles à un liant polymérique assurant une liaison homogène. De tels rubans peuvent notamment présenter des largeurs de 3 à 600mm et peuvent donc être réalisés à partir de un ou plusieurs fils, un fil étant constitué d'un ensemble de filaments. Des rubans de plus faibles largeurs peuvent même être obtenus dans le cas de fils où un fil très fins de 1K ou 3K est utilisé.

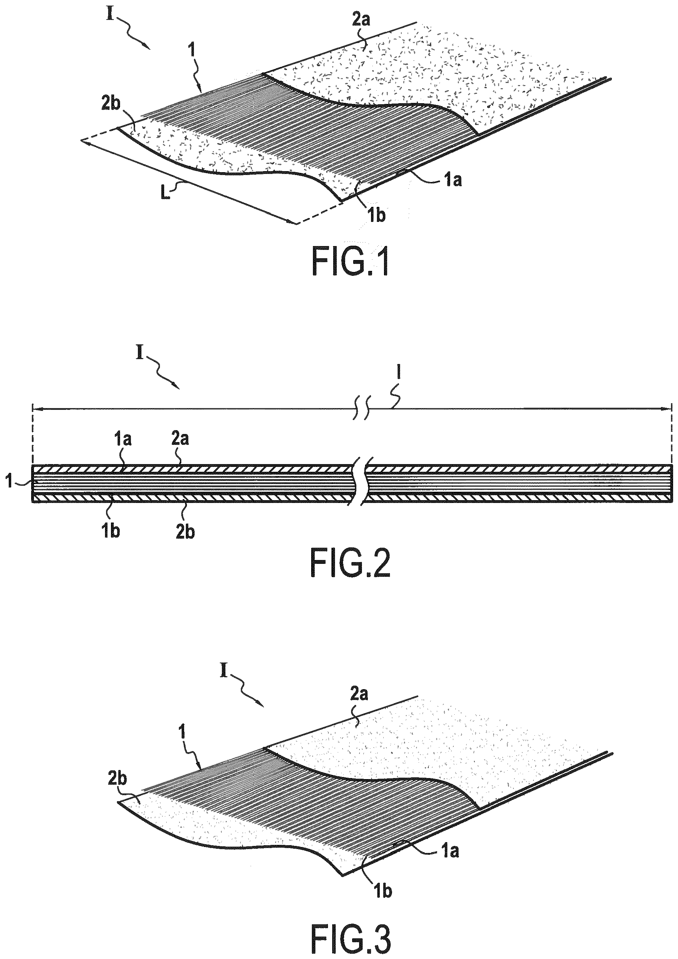

Comme le montre la **Figure 1,** les rubans I fabriqués dans le cadre de l'invention présentent une longueur l et une largeur **L.** Ces rubans sont constitués d'un ensemble de filaments (cas d'un seul fil **1**) ou d'un ensemble de fils **1** (chacun constitué d'un ensemble de filaments) qui s'étendent parallèlement à la largeur du ruban. Un ruban a une forme générale rectangulaire et est associé sur chacune de ses grandes faces **1a** et **1b** à un liant polymérique, comme le montre la **Figure 2.** Les **Figures 1** et **2** illustrent le cas hors invention où les liants polymériques sont deux non-tissés **2a** et **2b** et la **Figure 3,** le cas où le liant polymérique est de la poudre **3** répartie sur les deux faces du ruban **I**.

Les filaments ou fibres de renfort seront disposés de manière à assurer une couverture quasi-totale sur toute la surface du ruban. En particulier, lorsque le ruban est constitué d'une nappe unidirectionnelle de plusieurs fils, ceux-ci seront disposés bord à bord. Lorsque la largeur totale de la nappe unidirectionnelle est ajustée, de façon à être constante avec un écart type de largeur minimum avant la constitution du ruban, l'ajustement de la largeur de la nappe est réalisé en minimisant, voire évitant tout manquement de matière (« gap » en anglais) ou chevauchement (« overlap » en anglais).

Un fil est en général constitué d'un ensemble de fils ou filaments et comporte, en général, dans le cas des fils de carbone, de 1 000 à 80 000 filaments, avantageusement de 12 000 à 24 000 filaments. Les fils de renfort utilisés dans le cadre de l'invention sont, de préférence, en une matière choisie parmi le carbone, les céramiques, verres, silices, basaltes ou aramides, ou tout autre matériau utilisé dans le domaine des matériaux composites, les fibres pouvant être naturelles ou synthétiques. Le carbone est, néanmoins, particulièrement préféré. Les céramiques utilisables sont notamment le carbure de silicium et les oxydes réfractaires, par exemple, alumine et zircone. De façon, particulièrement préférée, dans le cadre de l'invention, des fils de carbone de 1 à 24 K, et préférentiellement de 12 et 24K, sont utilisés. Les fibres constitutives sont de préférence continues. Les fils utilisés présentent en général une section droite transversale sensiblement circulaire (qualifiés de fils ronds) ou, de préférence, sensiblement parallélépipédique ou elliptique (qualifiés de fils plats). Ces fils présentent une certaine largeur et épaisseur. A titre d'exemple, un fil plat de carbone de 3K et d'un titre de 200 tex présente généralement une largeur de 1 à 3 mm, un fil plat de carbone de 12K et d'un titre de 446 tex, une largeur de 2 à 5 mm, un fil plat de 12K d'un titre de 800tex, une largeur entre 3 et 7mm, un fil plat de carbone de 24K et d'un titre de 1600 tex, une largeur de 5 à 12 mm et un fil plat de carbone de 24K et d'un titre de 1040 tex, une largeur de 5 à 10 mm. Un fil plat de carbone de 3 000 à 24 000 filaments présentera donc le plus souvent une largeur de 1 à 12 mm. Parmi les fils de carbone, on peut distinguer des fils Haute Résistance (HR) dont le module en traction est compris entre 220 et 241GPa et dont la contrainte à rupture en traction est comprise entre 3450 et 4830MPa, les fils de Module Intermédiaire (IM) dont le module en traction est compris entre 290 et 297GPa et dont la contrainte à rupture en traction est comprise entre 3450 et 6200MPa et les Fils Haut Module (HM) dont le module en traction est compris entre 345 et 448GPa et dont la contrainte à rupture en traction est comprise entre 3450 et 5520Pa (d'après le « ASM Handbook », ISBN 0-87170-703-9, ASM International 2001).

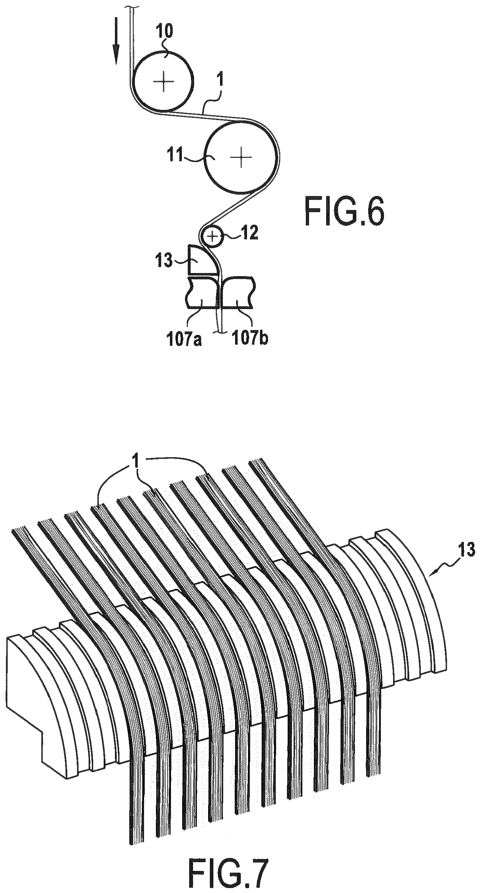

La constitution du ruban est réalisée à partir de un ou plusieurs fils. Dans le cas où un ruban est constitué de plusieurs fils, c'est l'ensemble des fils (et non chaque fil pris individuellement) qui va être calibré pour conduire à une nappe de largeur donnée. Le ou les fils peuvent être tirés d'une bobine et peuvent subir un étalement, avant l'étape de calibration. Pour cela, le ou les fils pourront passer sur un dispositif d'étalement, par exemple constitués de un ou plusieurs barreaux étaleurs **12,** comme illustré **Figure 6.** Cette étape d'étalement pourra être nécessaire, en fonction du grammage souhaité et également, pour obtenir, avant calibration une largeur pour la nappe ou pour les fils supérieure à la largeur souhaitée après calibration. Ce système de calibration pourra être complété par une barre **12** vibrante dans le sens de sa longueur, située en sortie des barreaux **10** et **11,** juste en amont des moyens de calibrage **13,** comme illustré **Figure 6.** De même, un tel dispositif pourra être complété par plusieurs barres vibrantes comparables à la barre **12** dans le cas où l'association de fils de titre important est utilisée pour des masses surfaciques très faibles.

L'étape de calibrage est réalisée en faisant passer la nappe ou le fil sur des moyens de calibrage, il peut s'agir d'un passage de largeur donné, notamment sous la forme d'une gorge à fond plat, aménagé sur un rouleau ou d'un passage aménagé entre deux dents, dans le cas où un ruban unique à base de un ou plusieurs fils est réalisé ou d'un peigne calibreur délimitant des passages calibrés pour plusieurs fils, tel qu'illustré **Figure 7,** dans le cas où plusieurs rubans sont fabriqués en parallèle. Lorsque l'on réalise une nappe constituée de plusieurs fils, en réalité, la calibration, à proprement parlé, de la largeur de la nappe ne se fait que sur les deux fils extérieurs, les autres fils étant guidés par un peigne se situant en amont de l'élément d'étalement, de telle sorte qu'il n'y ait pas d'espace libre entre les fils à l'intérieur de la nappe.

En sortie des moyens de calibrage, la nappe unidirectionnelle calibrée présentera sur toute sa longueur, une largeur quasi-constante qu'elle va garder tout au long du procédé, jusqu'à l'obtention du ruban final. De préférence, en sortie des moyens de calibrage, la largeur de la nappe unidirectionnelle calibrée présentera, sur toute la longueur de la nappe unidirectionnelle, un écart type notamment inférieur à 0,25 mm, de préférence inférieur à 0,24 mm et préférentiellement inférieur ou égal à 0,20 mm. Dans le cas où le ruban de fibres unidirectionnelles est associé sur chacune de ses faces à de la poudre, le calibrage pourra avoir lieu avant et/ou après l'association avec la poudre. Dans le cas hors invention où le liant polymérique est un tissu ou non-tissé, le calibrage aura lieu avant leur association au ruban unidirectionnel.

Aussi, dans le cas hors invention où le liant polymérique est un tissu ou non-tissé, notamment thermoplastique, en sortie des moyens de calibrage, la nappe unidirectionnelle calibrée obtenue est associée, sur chacune de ses faces, à un tissu ou non-tissé thermoplastique, par exemple sur un tapis convoyeur entraîné par des rouleaux. La distance entre la sortie des moyens de calibration et les moyens d'association de la nappe au liant polymérique (dans l'exemple illustré constitué des tapis convoyeurs) sera, de préférence, très faible, de l'ordre de quelques millimètres, afin de conserver la calibration obtenue. Pour permettre leur liaison avec les fils ou filaments, après refroidissement, les non-tissés sont soumis, en amont de leur association au ruban, à une étape de chauffage entraînant le ramollissement, voire la fusion du polymère. La largeur du non-tissé est choisie de manière à ce que ce dernier dépasse de part et d'autre de la nappe unidirectionnelle. Les conditions de chauffage et de pression, seront adaptées au matériau constitutif des non-tissés et à leur épaisseur. Le plus souvent une étape de thermocompression à une température comprise dans la gamme allant de $T_{f \, non\text{-}tissé}$ - 15°C et $T_{f \, non\text{-}tissé}$ + 60°C (avec $T_{f \, non\text{-}tissé}$ qui désigne la température de fusion du non-tissé) et sous une pression de 0,1 à 0,6 MPa sera réalisée. Il est, ainsi, possible d'atteindre des taux de compression du non-tissé avant et après association allant de 1 à 10. L'étape de contrecollage des non-tissés sur l'unidirectionnel de carbone est également déterminante pour maîtriser correctement l'épaisseur finale du produit intermédiaire. En effet, en fonction des conditions de température et de pression, notamment lors du contrecollage, il est possible de modifier, et donc d'ajuster, l'épaisseur du non-tissé présent de chaque côté dans le produit intermédiaire.

L'épaisseur des non-tissés avant leur association à la nappe unidirectionnelle sera choisie, en fonction de la façon dont ils vont être associés à la nappe de fibres unidirectionnelles. Le plus souvent, leur épaisseur sera très proche de l'épaisseur souhaitée sur le ruban. Il peut également être possible de choisir d'utiliser un non-tissé d'épaisseur plus importante qui sera laminé sous température lors de l'étape d'association, de manière à atteindre l'épaisseur voulue. De façon préférée, la nappe de fibres unidirectionnelles est associée sur chacune de ses grandes faces à deux non-tissés sensiblement identiques, de façon à obtenir un produit intermédiaire parfaitement symétrique. L'épaisseur du non-tissé avant association sur la nappe unidirectionnelle est comprise entre 0,5 et 200 μm, préférentiellement entre 10 et 170 μm. Sur le produit intermédiaire selon l'invention, l'épaisseur de chaque non-tissé est comprise dans la gamme allant de 0,5 à 50 microns, de préférence dans la gamme allant de 3 à 35 microns. L'épaisseur des différents non-tissés avant association est déterminée par la norme NF EN ISO 9073-2 en utilisant la méthode A avec une aire d'essai de 2827 mm² (disque de 60 mm de diamètre) et une pression appliquée de 0,5 kPa.

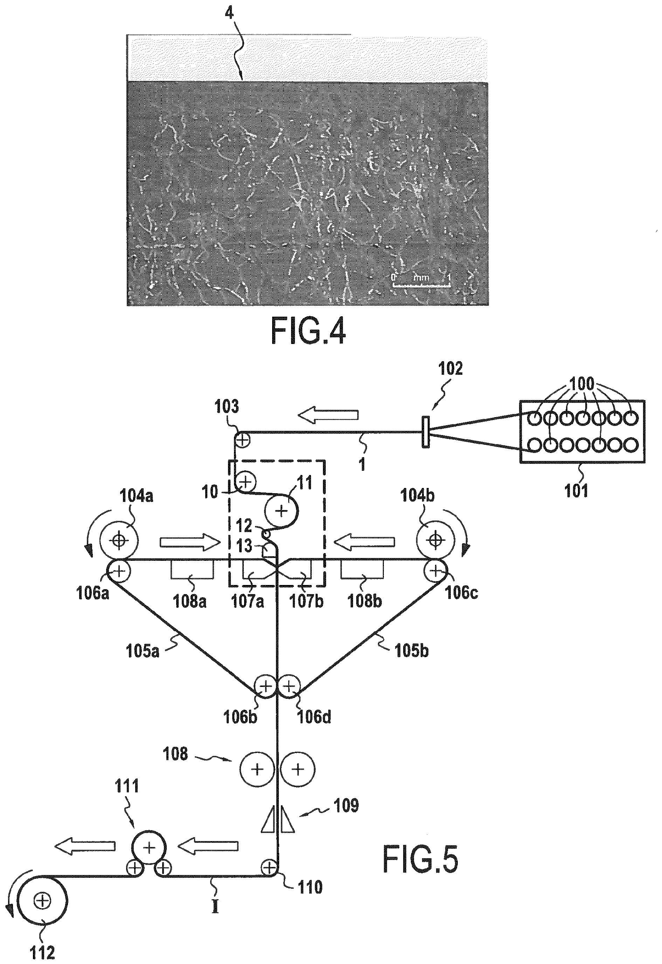

Ensuite, le ruban qui ne fait pas partie de l'invention est tiré du tapis convoyeur au moyen de rouleau d'entrainement (trio d'appel) et est soumis à une découpe au niveau de chacun de ses bords longitudinaux, au moyen d'un dispositif de découpe chauffant, et en particulier de couteaux chauffants. La découpe n'est pas réalisée dans un fil, mais juste à côté du bord du fil, afin d'éviter toute effilochure. Le découpage à chaud du non-tissé au niveau de chaque bord du ruban, entraine une certaine rétractation de ce dernier. Les deux non-tissés présentent une largeur supérieure à la largeur de la nappe unidirectionnelle, on observe un collage ponctuel des deux non tissés entre eux qui viennent préférentiellement emprisonner la nappe unidirectionnelle au niveau des bords de carbone. Le ruban obtenu présente alors un bord bien net **4,** sans fragments de filaments coupés, comme illustré **Figure 4.**

Le ruban est alors tracté par un trio de rouleaux d'appel. Il est également possible pour favoriser, encore, l'obtention d'un bord bien net de procéder à l'extraction des chutes de non-tissé, par des moyens d'entrainement de type rouleaux d'entrainement ou par des moyens d'aspiration.

La **Figure 5** présente de manière simplifié et schématique un dispositif permettant de fabriquer un ruban hors du cadre de l'invention, à partir d'une nappe unidirectionnelle de fils, notamment de carbone, associée, sur chacune de ses grandes faces, à un non-tissé, notamment thermoplastique.

Le ou les fils de carbone **1** sont déroulés à partir de bobines de carbone **100** fixées sur un cantre **101,** passent au travers d'un peigne **102,** sont conduits dans l'axe de la machine à l'aide d'un rouleau de guidage **103.** Les fils de carbone sont alors étalés grâce à la barre chauffante **11** et à la barre d'étalement **12** puis calibré grâce aux moyen de calibrage pour avoir une nappe unidirectionnelle à la largeur souhaitée. Les rouleaux de non-tissés **104a** et **104b** sont déroulés sans tension et transportés à l'aide de tapis continus **105a** et **105b** fixés entre les rouleaux libres en rotation **106a, 106b, 106c, 106d** et les barres chauffées **107a, 107b.** Les non-tissés **2a** et **2b** sont préchauffés dans les zones **108a** et **108b** avant d'être en contact avec les fils de carbones **1** et contrecollés de part et d'autre de deux barres chauffées **107a** et **107b** dont l'entrefer est contrôlé. Une calandre **108,** qui peut être refroidie, applique ensuite une pression sur la nappe unidirectionnelle avec un non-tissé de chaque côté, qui est ensuite dirigée vers les moyens de découpe **109.** Un rouleau de renvoi **110** permet de rediriger le ruban I vers le système de traction comprenant un trio d'appel **111** puis d'enroulage **112** pour former un rouleau constitué du ruban I.

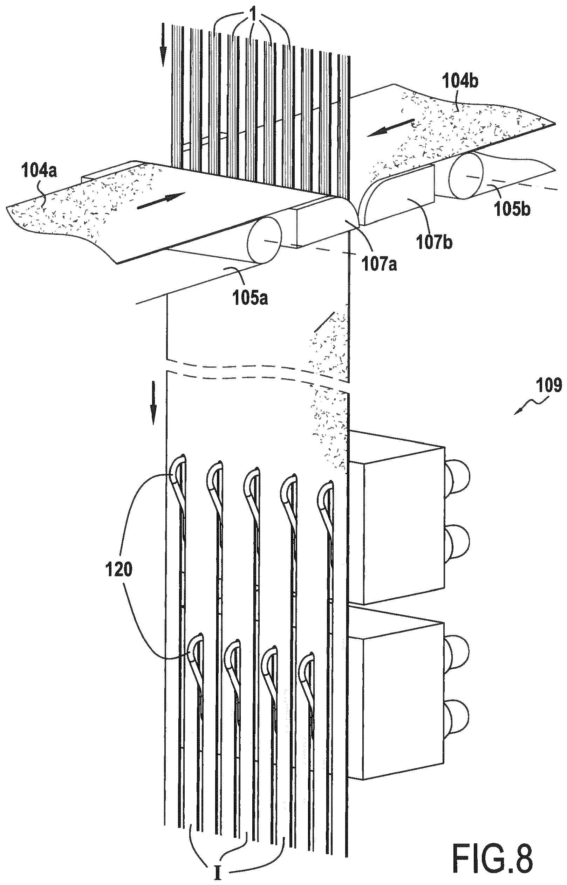

Il est également possible de réaliser hors du cadre de l'invention plusieurs rubans simultanément, dans ce cas, chaque fil ou ensemble de fils constitutifs d'un ruban sera étalé si nécessaire et calibré individuellement et les différents rubans seront positionnés de manière espacés, en laissant un espace suffisant entre chaque fil, de manière à pouvoir réaliser la découpe. Un non-tissé unique couvrant les fils et les espaces sera alors associé à l'ensemble des rubans sur chacune de leur face, comme illustré **Figure 8.** Une découpe pourra alors être opérée entre chaque ruban, et de manière préférentielle, sans création de déchets de non-tissé entre les découpes, grâce à un dispositif tel qu'illustré **Figure 8,** en utilisant plusieurs (deux dans l'exemple illustré) lignes de moyens coupant **120** parallèles espacés et décalées d'une largeur de ruban.

De manière à encore favoriser l'obtention d'un bord net et une bonne maîtrise de la largeur du ruban, les parties découpées de part et d'autre de ses bords, sont entraînés par des moyens d'extraction, tels que des moyens d'entraînement ou d'aspiration. Dans ce cas, les parties extrêmes correspondant aux déchets comportent un fil dont le non-tissé peut n'être découpé que d'un seul côté, ce qui va permettre de favoriser l'entrainement ou l'aspiration des déchets. Il pourrait également être prévu de disposer sur les bords destinés à être découpés et jouer le rôle de déchets, un fil de nature différente de ceux servant à la constitution des rubans. Cela vaut, aussi bien dans le cas de la constitution d'un ruban unique, que dans le cas de plusieurs rubans réalisés en parallèle.

La largeur du ou des rubans ainsi confectionnés peut être contrôlée par un système de mesure optique, avant son stockage. Selon un tel procédé en continu, les rubans de fibres unidirectionnelles peuvent être produits sur un très grand métrage. Du fait de leur souplesse, les rubans pourront être directement enroulés, pour être stockés sous la forme de rouleau, en sortie de la chaîne de production. Ces bobines pourront comporter des flasques à la manière des bobines de cinéma, ou, dans un mode avancé, seront trancannées directement sur bobines cylindriques en sortie de machine comme le sont les bobines de fils de carbone livrées par les fabricants.

Dans le cadre de l'invention où le ruban est recouvert sur chacune de ses faces par de la poudre, notamment thermoplastique ou thermodurcissable, il n'est pas utile d'opérer la moindre découpe. La calibration du ruban pourra être réalisée grâce à des moyens de calibrage tels que décrits précédemment, en amont et/ou en aval de l'association du ruban à la poudre.

Selon un mode de réalisation préféré, un ruban calibré, préférentiellement chauffé sera associé à de la poudre sur chacune de ses faces, notamment par passage dans une enceinte électrostatique de poudrage. De façon avantageuse, le refroidissement sera, ensuite, réalisé en maintenant le calibrage précédemment obtenu, et ce en faisant de nouveau passer le ruban porteur de la poudre sur des moyens de calibrage tels que précédemment décrits. Un tel moyen, tel qu'un peigne circulaire conforme à la **Figure 7** et à un ou plusieurs passages en fonction du nombre de rubans réalisés, permet au ruban de garder sa largeur constante pendant l'application de la poudre et son refroidissement.

Le procédé selon l'invention concerne la fabrication de fils ou nappes unidirectionnelles calibrées de fibres sèches, c'est-à-dire destinés à des procédés dits « directs ». Aussi, la masse de liant polymérique représente de 0,1 à 10 %, et avantageusement de 3 à 10 % de la masse totale du ruban.

Dans le cadre de l'invention, on utilise des liants de type poudre qui présentent une couverture aléatoire et isotropique et permettent ainsi d'assurer une cohésion uniforme et dans toutes les directions, contrairement à la mise en oeuvre de fils espacés. La liaison entre le liant polymérique et le ruban unidirectionnel est réalisé, par chauffage, en utilisant le caractère collant à chaud du liant polymérique, suivi d'un refroidissement.

A titre d'exemple, le liant polymérique peut être en un matériau thermoplastique choisi parmi les Polyamides (PA : PA6, PA12, PA11, PA6,6, PA 6,10, PA 6,12, ...), Copolyamides (CoPA), les Polyamides - block ether ou ester (PEBAX, PEBA), polyphtalamide (PPA), les Polyesters (Polyéthylène téréphtalate -PET-, Polybutylène téréphtalate -PBT-...), les Copolyesters (CoPE), les polyuréthanes thermoplastiques (TPU), les polyacétales (POM...), les Polyoléfines (PP, HDPE, LDPE, LLDPE....), Polyéthersulfones (PES), les polysulfones (PSU...), les polyphénylènes sulfones (PPSU...), PolyétherétherCétones (PEEK), PolyétherCétoneCétone (PEKK), Poly(Sulfure de Phénylène) (PPS), ou Polyétherimides (PEI), les polyimides thermoplastiques, les polymères à cristaux liquides (LCP), les phenoxys, les copolymères à blocs tels que les copolymères Styrène-Butadiene-Méthylméthacrylate(SBM), les copolymères Méthylméthacrylate-Acrylate de Butyl-Méthylméthacrylate (MAM) et leurs mélanges.

Le liant polymérique pourra également être de nature thermodurcissable tels que les époxydes, les polyesters insaturés, les vinylesters, les polyuréthanes, les phénoliques, les polyimides, les bismaléimides, ou un mélange thermoplastique / thermodurcissable.

Les rubans de fibres unidirectionnelles selon l'invention peuvent être utilisés pour la réalisation de pièces aéronautiques qui demandent de hautes performances mécaniques, et notamment pour la réalisation de pièces primaires, par exemple pour le fuselage, les panneaux de voilure, ou toute autre pièce complexe, telles que les aubes de soufflante. De telles pièces pourrons être réalisées par tout procédé direct connu, tels que les procédés par infusion ou injection de résine.

Les exemples ci-après permettent d'illustrer l'invention, mais n'ont aucun caractère limitatif.

Les fils de carbone AS7 J et GS 12K et IMA GS 12K sont commercialisés par la société HEXCEL Corporation, Stamford, CT USA.

Le non-tissé 1R8D03 en copolyamide de 3g/m$^2$, non utilisé dans l'invention, est commercialisé par la société Protechnic.

A titre de référentiel, la largeur de nappes unidirectionnelles non calibrées (208 fils pour la masse surfacique 321g/m$^2$, 158 fils pour la masse surfacique 250g/m$^2$ et 78 fils pour la masse surfacique 125g/m$^2$) et non associées à un liant polymérique autre qu'un fil thermofusible transversal tous les 50mm, a été mesurée sur une longueur de 500 m, en effectuant une mesure manuelle tous les 5 m. Les résultats obtenus sont présentés dans le **TABLEAU 1** ci-après

**TABLEAU 1**

| AS7 J 12K | Largeur moyenne (mm) | Ecart type (mm) |
|---|---|---|
| 321 g/m$^2$ | 519 | 1,1 |
| 250 g/m$^2$ | 506 | 1,8 |
| 125 g/m$^2$ | 499 | 0,3 |

Il apparaît que l'écart type varie entre 0,3 et 1,8 mm.

Ensuite, un procédé hors invention a été mis en oeuvre. Une machine telle que représentée **FIGURE 5** a été utilisée. La référence des éléments chauffants de découpe est : Thermocut TC-1 de la société LOEPFE BROTHER, LIMITED, Wetzikon, Suisse.

Les conditions opératoires sont indiquées dans le tableau 2 (hors invention).

**TABLEAU 2**

| Non-tissé | Fibre | Masse surfacique de carbone (g/m²) | Largeur (mm) | Vitesse ligne (m/min) | T° Barre 11 (°C) | T° Barre 13 (°C) | T° 108a & 108b (°C) | T° 107a & 107b (°C) |
|---|---|---|---|---|---|---|---|---|
| 1R8D03 | AS7J 12K | 126 | 6,21 | 2,5 | 170 | 100 | 110 | 230 |
| | AS7 GS 12K | 252 | 25,4 | 2 | 200 | 200 | 110 | 240 |
| | IMA GS 12K | 210 | 6,35 | 1,3 | 200 | 200 | 120 | 140 |
| | | 193 | 64,7 | | | | | |
| | | | 460 | | | | | |

Les caractéristiques des rubans obtenus hors invention sont présentées **TABLEAU 3.**

Les mesures de largeur moyenne et d'écart type ont été réalisées grâce au dispositif suivant : le ruban est déroulé de son support à la vitesse constante de 1,2m par minute, avec une tension constante comprise entre 200 et 400cN, où il passe ensuite, à une distance de 265mm et sans support à cet endroit, devant une caméra modèle Baumer Optronic Type FWX 20, focale 20mm, 1624x1236 pixels (Baumer Optronic Gmbh, Allemagne). La calibration de la caméra est la suivante : 1 pixel équivaut à 0.05mm, ce qui correspond à une taille de photo de 1640 pixels x 0,05=82mm. Une photo est ensuite prise tous les 38mm, sur une longueur minimum de 50m correspondant à 1315 mesures de largeur minimum.

Le logiciel NEUROCHECK 5.1 (Neurocheck Gmbh, Allemagne) analyse ensuite l'image et stocke les valeurs de largeurs dans un fichier qui sera ensuite traité statistiquement par le logiciel MINITAB (Minitab Inc, USA).

**TABLEAU 3**

| | | Largeur moyenne (mm) | Ecart-type (mm) |
|---|---|---|---|
| AS7J 12K | 126g/m$^2$ | 6,21 | 0,18 |
| | 252g/m$^2$ | 25,4mm | 0,12 |
| IMA GS 12K | 210g/m$^2$ | 6,35 | 0,18 |
| | 193 g/m$^2$ | 64,7 | 0,12 |
| | | 460 | 0,21 |

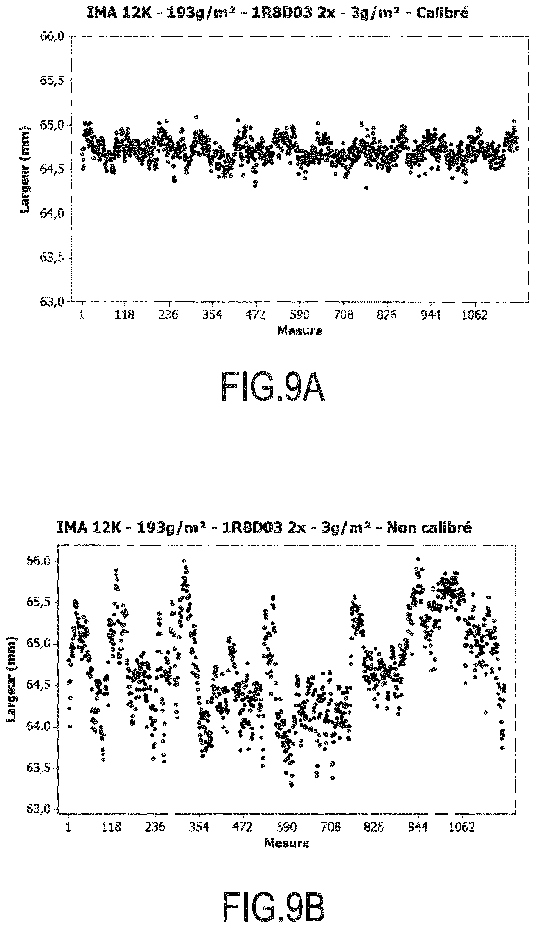

Il apparaît que l'écart type varie entre 0,12 et 0,21 mm et ne dépend pas de la largeur du ruban. Les figures 9A à 12B concernent des liants non-tissés et ne font pas partie de l'invention.

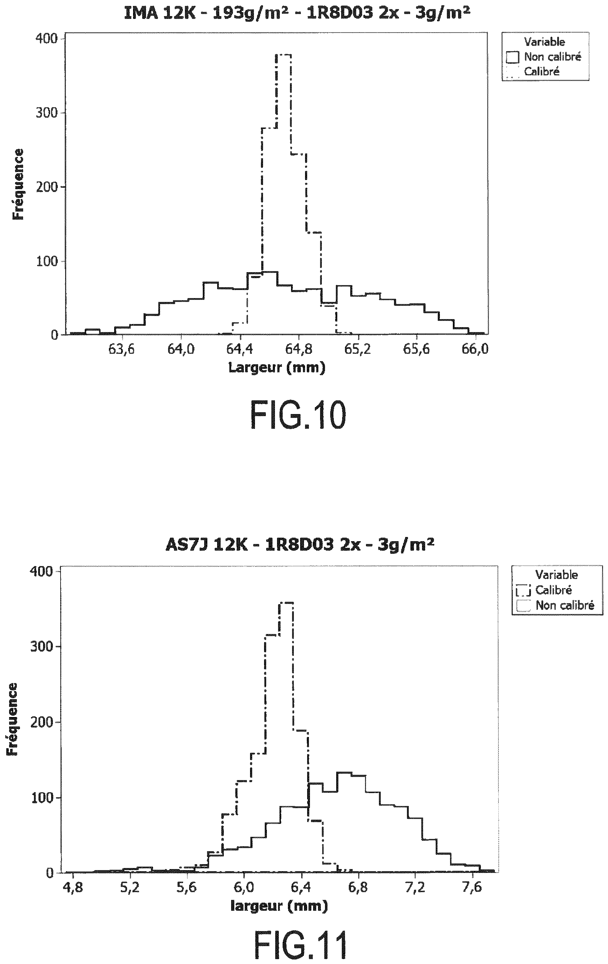

Les **Figures 9A, 9B** et **10** comparent la largeur moyenne et l'écart type obtenu avec d'une part le ruban hors du cadre de l'invention de **193g/m$^2$** (réalisé avec 28 fils IMA GS 12 K de 446Tex sur une largeur de 64,7mm) et un ruban réalisé avec les mêmes fils mais sans calibrage et avec les mêmes non-tissés. Dans le cas du ruban selon l'invention, l'écart type obtenu est de 0,12 mm, alors que sans calibration, l'écart type est de 0,57 mm.

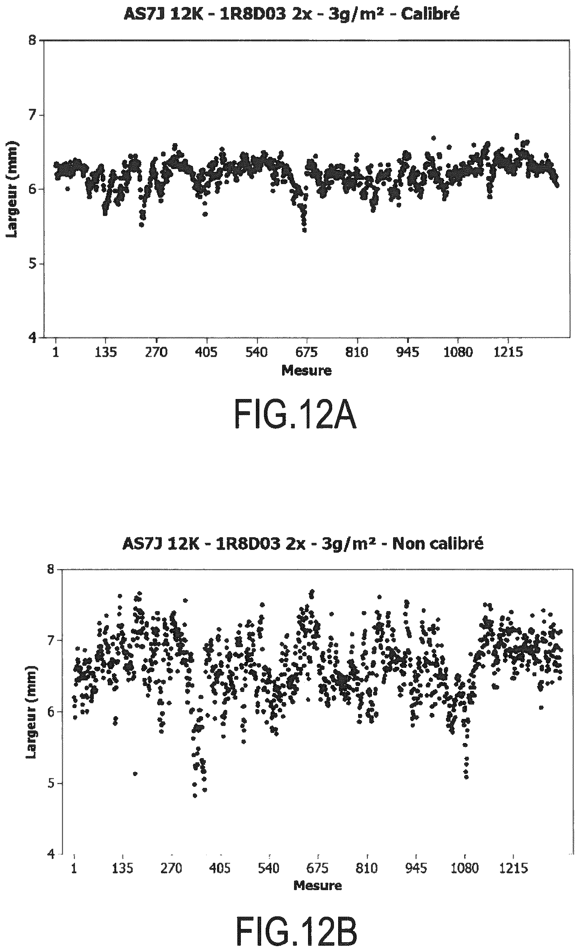

Les **Figures 11, 12A** et **12B** comparent d'une part le ruban hors du cadre de l'invention associant une nappe unidirectionnelle de 126g/m$^2$ (réalisé avec 1 fil AS7JK 12K de 785Tex sur une largeur moyenne 6,21mm) à deux non-tissés et un ruban réalisé avec le même fil mais sans calibrage et les deux mêmes non-tissés. Dans le cas du ruban avec calibration, l'écart type obtenu est de 0,18mm, alors que sans calibration, l'écart type est de 0,44mm.

Le procédé avec calibration a également été mis en oeuvre pour réaliser un ruban selon l'invention avec de la poudre sur chacune de leur face. Une machine décrite ci-après a été utilisée avec les conditions opératoires décrites dans le **TABLEAU 4.** La machine comprend :

- des moyens d'étalement **10, 11** et **12** et de calibrage **13** conformes aux **Figures 6** et **7,**
- en sortie des moyens de calibrage 13, sous la forme d'un peigne circulaire, les nappes de fils unidirectionnelles sont acheminées dans une enceinte de poudrage électrostatique, dans lequel un pistolet électrostatique est positionné à une distance **d** des fils, de façon à former un angle **a** avec ces derniers,
- en sortie de l'enceinte de poudrage, la fixation de la poudre sur les fils est réalisée avec des radiants infrarouges courts,
- les rubans passent alors sur un nouveau peigne circulaire conforme à la **Figure 7,** puis sur une barre simple avant de subir un refroidissement à l'air.

La poudre utilisée est une résine époxy contenant un durcisseur (7 P160, de la société Akzo Nobel). Le pistolet électrostatique utilisé est le modèle OPTIGUN OA02 de la marque GEMA (ITW GEMA GmbH, Suisse). L'agitateur est mis en marche uniquement pendant le poudrage afin d'éviter l'amalgame de la poudre.

**TABLEAU 4**

| Taux massique de poudre (%) | Fibre | Masse surfacique de carbone (g/m$^2$) | Largeur (mm) | Vitesse du fil (m/min) |
|---|---|---|---|---|
| 9 | AS7J 12K | 304 | 2,58 | 50 |

| T° Barre 201 (°C) | Puissance radiants Infrarouge courts (W) | Distance radiants Infrarouge courts au fil (mm) | Distance du pistolet électrostatique au fil - d (mm) | Angle du pistolet par rapport à au fil - $\alpha$ (°) |
|---|---|---|---|---|
| 220 | 500 | 40 | 100 | 38 |

(suite)

| Pression arrivée d'air (bars) | Tension (kV) | Débit d'air total (m3/h) | Réglage quantité de poudre (%) | débit d'air nettoyage électrode (m3/h) |
|---|---|---|---|---|
| 5 | 70 | 5 | 10 | 1,4 |

Les caractéristiques du ruban obtenu sont présentées **TABLEAU 5.**

**TABLEAU 5**

| | | Largeur moyenne (mm) | Ecart type (mm) |
|---|---|---|---|
| **AS7J 12K** | **304 g/m$^2$** | 2,58 | 0,12 |

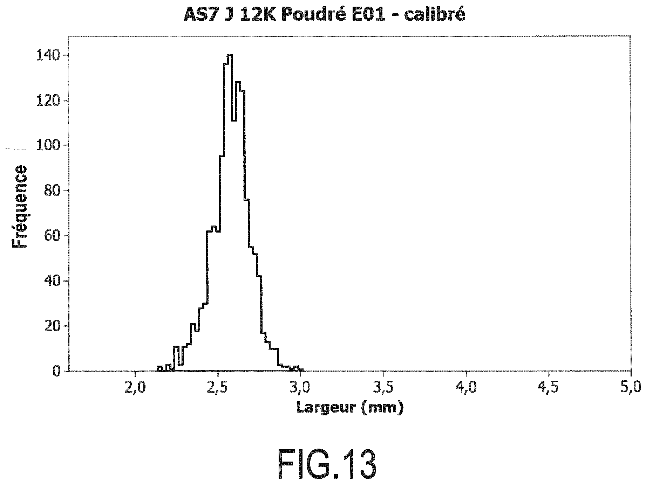

La **Figure 13** montre la répartition en largeur du ruban conforme à l'invention associant une nappe unidirectionnelle de 304g/m$^2$ (réalisé avec 1 fil AS7JK 12K de 785Tex sur une largeur moyenne de 2,58mm) à de la poudre L'écart type obtenu est de 0,12mm, alors que sans calibration, l'écart type est de 0,44mm.

**Revendications**

1. - Procédé de préparation d'un ruban de fils ou filaments de renfort associé sur chacune de ses faces à un liant polymérique, ledit ruban présentant une largeur donnée sensiblement constante sur toute sa longueur, avec un écart type inférieur à 0,25 mm, dans lequel les fils ou filaments s'étendent selon une direction parallèle à la longueur du ruban comprenant les étapes successives suivantes :

   a') un premier ajustement de la largeur du ruban à la largeur souhaitée grâce à des moyens de calibrage, conduisant à une largeur sensiblement constante sur toute sa longueur, avec un écart type inférieur à 0,25 mm,
   a) association du ruban sur chacune de ses faces au liant polymérique qui est une poudre d'un ou plusieurs polymères thermoplastiques et/ou thermodurcissables, permettant d'assurer une cohésion homogène du ruban, de manière à ce que la masse totale de liant représente de 0,1 à 10 % de la masse totale du ruban obtenu,
   b) ajustement de la largeur du ruban à la largeur souhaitée grâce à des moyens de calibrage.

2. - Procédé selon la revendication 1 caractérisé en ce la liaison entre le liant polymérique et le ruban unidirectionnel est réalisée, par chauffage, en utilisant le caractère collant à chaud du liant polymérique, suivi d'un refroidissement.

3. - Procédé selon la revendication 1 ou 2 **caractérisé en ce qu'**il comprend en amont de l'étape a) un premier ajustement de la largeur du ruban à la largeur souhaitée grâce à des moyens de calibrage.

4. - Procédé selon la revendication 2 et 3 **caractérisé en ce que** le refroidissement est réalisé en maintenant le calibrage précédemment obtenu grâce au premier ajustement de la largeur du ruban, et ce en faisant de nouveau passer le ruban porteur de la poudre sur des moyens de calibrage.

5. - Procédé selon l'une des revendications précédentes **caractérisé en ce que** la largeur du ruban présente sur toute sa longueur un écart type inférieur à 0,22 mm, et préférentiellement à 0,20 mm.

6. - Procédé selon l'une des revendications précédentes **caractérisé en ce que** le ruban est réalisé à partir d'un seul fil correspondant à un ensemble de filaments.

7. - Procédé selon l'une des revendications 1 à 5 **caractérisé en ce que** le ruban est réalisé à partir de plusieurs fils.

8. - Procédé selon l'une des revendications précédentes **caractérisé en ce que** plusieurs rubans sont réalisés simultanément.

9. - Procédé selon l'une des revendications précédentes **caractérisé en ce que** la masse de liant polymérique représente de 3 à 10 % de la masse totale du ruban.

10. - Procédé selon l'une des revendications précédentes **caractérisé en ce que** les fils ou filaments sont en un matériau choisi parmi les matériaux suivants : carbone, verre, aramide, silice, céramique et leurs mélanges.

11. - Procédé selon l'une des revendications précédentes **caractérisé en ce que** le liant polymérique est en un matériau choisi parmi les Polyamides (PA : PA6, PA12, PA11, PA6,6, PA 6,10, PA 6,12, ...), Copolyamides (CoPA), les Polyamides - block ether ou ester (PEBAX, PEBA), polyphtalamide (PPA), les Polyesters (Polyéthylène téréphtalate -PET-, Polybutylène téréphtalate - PBT-...), les Copolyesters (CoPE), les polyuréthanes thermoplastiques (TPU), les polyacétales (POM...), les Polyoléfines (PP, HDPE, LDPE, LLDPE....), Polyéthersulfones (PES), les polysulfones (PSU...), les polyphénylènes sulfones (PPSU...), PolyétherétherCétones (PEEK), PolyétherCétoneCétone (PEKK), Poly(Sulfure de Phénylène) (PPS), ou Polyétherimides (PEI), les polyimides thermoplastiques, les polymères à cristaux liquides (LCP), les phenoxys, les copolymères à blocs tels que les copolymères Styrène-Butadiene-Méthylméthacrylate(SBM), les copolymères Méthylméthacrylate-Acrylate de Butyl-Méthylméthacrylate (MAM) et leurs mélanges.

12. - Ruban de fils ou filaments de renfort associé sur chacune de ses faces à un liant polymérique, dans lequel les fils ou filaments s'étendent selon une direction parallèle à la longueur du ruban, la masse de liant polymérique représentant de 0,1 à 10 % de la masse totale du ruban, la largeur du ruban étant de 3 à 600 mm, ledit ruban présente une largeur donnée sensiblement constante sur toute sa longueur, **caractérisé en ce que** la largeur du ruban présente, sur toute la longueur du ruban, un écart type inférieur à 0,25 mm, et ledit ruban étant susceptible d'être obtenu selon le procédé défini à l'une des revendications 1 à 11.

13. - Ruban selon la revendication 12 **caractérisé en ce que** la largeur du ruban présente, sur toute la longueur du ruban, un écart type inférieur à 0,22 mm.

14. - Ruban selon la revendication 12 **caractérisé en ce que** la largeur du ruban présente, sur toute la longueur du ruban, un écart type inférieur à 0,20 mm.

15. - Ruban selon l'une des revendications 12 à 14 **caractérisé en ce qu'**il ne présente pas de fibres coupées sur ses bords longitudinaux.


**Patentansprüche**

1. Verfahren zur Herstellung eines Bandes aus Verstärkungsgarnen oder

    - filamenten, das auf jeder seiner Seiten mit einem polymeren Bindemittel verbunden ist, wobei das Band eine gegebene Breite aufweist, die über seine gesamte Länge im Wesentlichen konstant ist, mit einer Standardabweichung von weniger als 0,25 mm, wobei sich die Garne oder Filamente in einer Richtung parallel zur Länge des Bandes erstrecken, wobei das Verfahren die folgenden Schritte umfasst:

    a') ein erstes Einstellen der Breite des Bandes auf die gewünschte Breite mittels Kalibriermitteln, wobei die Breite über seine gesamte Länge im Wesentlichen konstant ist, mit einer Standardabweichung von weniger als 0,25 mm,
    a) Verbinden des Bandes auf jeder seiner Seiten mit dem polymeren Bindemittel, das ein Pulver aus einem oder mehreren thermoplastischen und/oder thermohärtbaren Polymeren ist, wodurch es ermöglicht wird, eine homogene Kohäsion des Bandes zu gewährleisten, derart, dass die Gesamtmasse des Bindemittels 0,1 bis 10 % der Gesamtmasse des erhaltenen Bandes ausmacht,
    b) Einstellen der Breite des Bandes auf die gewünschte Breite mittels Kalibriermitteln.

2. Verfahren nach Anspruch 1, **dadurch gekennzeichnet, dass** die Bindung zwischen dem polymeren Bindemittel und dem unidirektionalen Band durch Erwärmen unter Nutzung der Wärmeverklebbarkeit des polymeren Bindemittels und anschließender Kühlung hergestellt wird.

3. Verfahren nach Anspruch 1 oder 2, **dadurch gekennzeichnet, dass** es vor Schritt a) ein erstes Einstellen der Breite des Bandes auf die gewünschte Breite mittels Kalibriermitteln umfasst.

4. Verfahren nach Anspruch 2 und 3, **dadurch gekennzeichnet, dass** die Kühlung erzielt wird, indem die Kalibrierung, die vorher mittels des ersten Einstellens der Breite des Bandes erhalten wurde, beibehalten wird, und dies indem das Band, welches das Pulver trägt, erneut über die Kalibriermittel laufen gelassen wird.

5. Verfahren nach einem der vorhergehenden Ansprüche, **dadurch gekennzeichnet, dass** die Breite des Bandes über seine gesamte Länge eine Standardabweichung von weniger als 0,22 mm und vorzugsweise weniger als 0,20 mm aufweist.

6. Verfahren nach einem der vorhergehenden Ansprüche, **dadurch gekennzeichnet, dass** das Band aus einem einzigen Garn hergestellt ist, das einem Satz von Filamenten entspricht.

7. Verfahren nach einem der Ansprüche 1 bis 5, **dadurch gekennzeichnet, dass** das Band aus mehreren Garnen hergestellt ist.

8. Verfahren nach einem der vorhergehenden Ansprüche, **dadurch gekennzeichnet, dass** mehrere Bänder gleichzeitig hergestellt werden.

9. Verfahren nach einem der vorhergehenden Ansprüche, **dadurch gekennzeichnet, dass** die Masse des polymeren Bindemittels 3 bis 10 % der Gesamtmasse des Bandes ausmacht.

10. Verfahren nach einem der vorhergehenden Ansprüche, **dadurch gekennzeichnet, dass** die Garne oder Filamente aus einem Material hergestellt sind, das aus den folgenden Materialien ausgewählt ist: Kohlenstoff, Glas, Aramid, Siliziumdioxid, Keramik und Mischungen derselben.

11. Verfahren nach einem der vorhergehenden Ansprüche, **dadurch gekennzeichnet, dass** das polymere Bindemittel aus einem Material hergestellt wird, das ausgewählt ist aus Polyamiden (PA: PA6, PA12, PA11, PA6,6, PA 6,10, PA 6,12, ....), Copolyamiden (CoPA), Polyether-/-ester-Block-Amiden (PEBAX, PEBA), Polyphtalamid (PPA), Polyestern (Polyethylenterephthalat -PET-, Polybutylenterephthalat -PBT-.....), Copolyestern (CoPE), thermoplastischen Polyurethanen (TPU), Polyacetalen (POM...), Polyolefinen (PP, HDPE, LDPE, LLDPE.....), Polyethersulfonen (PES), Polysulfonen (PSU....), Polyphenylensulfonen (PPSU...), Polyetheretherketonen (PEEK), Polyetherketonketonen (PEKK), Poly(Phenylsulfid) (PPS) oder Polyetherimiden (PEI), thermoplastischen Polyimiden, Flüssigkristallpolymeren (LCP), Phenoxys, Blockcopolymeren wie Styrol-Butadien-Methylmethacrylat (SBM)-Copolymeren, Methylmethacrylat-Butylacrylat-Methylmethacrylat (MAM)-Copolymeren und Mischungen davon.

12. Band aus Verstärkungsgarnen oder -filamenten, das auf jeder seiner Seiten mit einem polymeren Bindemittel verbunden ist, wobei sich die Garne oder Filamente in einer Richtung parallel zur Länge des Bandes erstrecken, wobei die Masse des polymeren Bindemittels 0,1 bis 10 % der Gesamtmasse des Bandes ausmacht und die Breite des Bandes 3 bis 600 mm beträgt, wobei das Band eine gegebene Breite aufweist, die über seine gesamte Länge im Wesentlichen konstant ist, **dadurch gekennzeichnet, dass** die Breite des Bandes über die gesamte Länge des Bandes eine Standardabweichung von weniger als 0,25 mm aufweist, und wobei das Band gemäß dem in einem der Ansprüche 1 bis 11 definierten Verfahren erhalten werden kann.

13. Band nach Anspruch 12 **dadurch gekennzeichnet, dass** die Breite des Bandes über die gesamte Länge des Bandes eine Standardabweichung von weniger als 0,22 mm aufweist.

14. Band nach Anspruch 12 **dadurch gekennzeichnet, dass** die Breite des Bandes über die gesamte Länge des Bandes eine Standardabweichung von weniger als 0,20 mm aufweist.

15. Band nach einem der Ansprüche 12 bis 14, **dadurch gekennzeichnet, dass** es keine geschnittenen Fasern an seinen Längskanten aufweist.

## Claims

1. - Preparation process for a ribbon of reinforcement strands or filaments associated on each of its faces with a polymeric binder, said ribbon having an essentially constant given width over its entire length, with a standard deviation less than 0.25 mm, in which the strands or filaments extend in a direction parallel to the length of the ribbon including the following successive stages:

   a') a first adjustment of the ribbon width to the desired width thanks to dimensioning means, leading to an essentially constant width over its entire length, with a standard deviation less than 0.25 mm,

a) association of the ribbon on each of its faces to a polymeric binder which is a powder of one or several thermoplastic and/or thermosetting polymers, to ensure a homogeneous cohesion of the ribbon, so that the total weight of the binder is from 0.1 to 10% of the total weight of the obtained ribbon,

b) adjustment of the ribbon width to the desired width thanks to dimensioning means.

2. - Process according to claim 1 **characterized in that** the association of the unidirectional ribbon and the polymeric binder is achieved by heating, using the hot tackiness nature of the polymeric binder, followed by cooling.

3. - Process according to claim 1 or 2 **characterized in that** before step a) it comprises a first adjustment of the ribbon width to the desired width thanks to dimensioning means.

4. - Process according to claims 2 and 3 **characterized in that** the cooling is achieved by maintaining the previously dimensioning obtained with the first adjustment of the ribbon width, and by again transferring the powder-bearing ribbon on dimensioning means.

5. - Process according to one of the preceding claims **characterized in that** the width of the ribbon has over its entire length a standard deviation less than 0.22 mm, and preferentially less than 0.20 mm.

6. - Process according to one of the preceding claims **characterized in that** the ribbon is created from a single strand corresponding to an assembly of filaments.

7. - Process according to one of claims 1 to 5 **characterized in that** the ribbon is created from several strands.

8. - Process according to one of the preceding claims **characterized in that** several ribbons are created simultaneously.

9. - Process according to one of the preceding claims **characterized in that** the weight of the polymeric binder represents 3 to 10% of the total weight of the ribbon.

10. - Process according to one of the preceding claims **characterized in that** the material of the strands or filaments is selected among the following materials: carbon, glass, aramid, silica, ceramic and their mixtures.

11. - Process according to one of the preceding claims **characterized in that** the polymeric binder is in a material selected from the polyamides (PA: PA6, PA12, PA11, PA6.6, PA 6.10, PA 6.12, ...), copolyamides (CoPA), ether or ester block polyamides (PEBAX, PEBA), polyphthalamide (PPA), polyesters (polyethylene terephthalate -PET-, polybutylene terephthalate -PBT-...), copolyesters (CoPE), thermoplastic polyurethanes (TPU), polyacetals (POM...), polyolefins (PP, HDPE, LDPE, LLDPE....), polyethersulfones (PES), polysulfones (PSU...), polyphenylene sulfones (PPSU...), polyetheretherketones (PEEK), polyetherketoneketones (PEKK), poly(phenylene sulfide) (PPS), polyetherimides (PEI), thermoplastic polyimides, liquid crystal polymers (LCP), phenoxys, block copolymers such as styrene-butadiene-methylmethacrylate copolymers (SBM), methylmethacrylate-acrylate of butyl-methylmethacrylate copolymers (MAM) and their mixtures.

12. - Ribbon of reinforcement strands or filaments associated on each of its faces with a polymeric binder in which the strands or filaments extend in a direction parallel to the length of the ribbon, the weight of the polymeric binder being from 0.1 to 10 % of the total weight of the ribbon, the width of the ribbon being from 3 to 600 mm, said ribbon has a given width essentially constant over all its length, **characterized in that** the width of the ribbon presents over all the length of the ribbon a standard deviation less than 0.25 mm, and said ribbon being obtainable by the process as defined in one of claims 1 to 11.

13. - Ribbon according to claim 12 **characterized in that** the width of the ribbon presents over all the length of the ribbon a standard deviation less than 0.22 mm.

14. - Ribbon according to claim 12 **characterized in that** the width the ribbon presents over all the length of the ribbon a standard deviation less than 0.20 mm

15. - Ribbon according to one of claims 12 to 14 **characterized in that** it has no cut fibers along its longitudinal edges.

I

1

2a

2b

1a

L

1b

## FIG.1

I

I

1a    2a

1

1b    2b

## FIG.2

I

2a

1

2b

1a

1b

## FIG.3

## FIG.4

## FIG.5

FIG.6

FIG.7

FIG.8

**IMA 12K - 193g/m² - 1R8D03 2x - 3g/m² - Calibré**

## FIG.9A

**IMA 12K - 193g/m² - 1R8D03 2x - 3g/m² - Non calibré**

## FIG.9B

IMA 12K - 193g/m² - 1R8D03 2x - 3g/m²

FIG.10

AS7J 12K - 1R8D03 2x - 3g/m²

FIG.11

**AS7J 12K - 1R8D03 2x - 3g/m² - Calibré**

FIG.12A

**AS7J 12K - 1R8D03 2x - 3g/m² - Non calibré**

FIG.12B

FIG.13

**EP 3 656 549 B1**

## RÉFÉRENCES CITÉES DANS LA DESCRIPTION

**Documents brevets cités dans la description**

- US 2005048280 A
- WO 9220521 A
- EP 0554950 A
- WO 9112898 A

**Littérature non-brevet citée dans la description**

- ASM Handbook. ASM International, 2001